# FASCICULE DE BREVET EUROPEEN

(11) **EP 2 258 571 B1**
(45) Date de publication et mention de la délivrance du brevet: **20.04.2016**
(21) Numéro de dépôt: 10164313.8
(22) Date de dépôt: 28.05.2010
(51) Int. Cl.: B60H 1/00

(54) **Dispositif d'échange thermique et système de gestion thermique**
Wärmetauschvorrichtung und Wärmeregelungssystem
Heat exchange device and thermal management system

(30) Priorité: 05.06.2009 FR 0902712
(43) Date de publication de la demande: 08.12.2010
(73) Titulaire: Valeo Systèmes Thermiques, 78321 Le Mesnil Saint Denis Cedex (FR)
(72) Inventeur: Karl, Stefan, 78112, FOURQUEUX (FR)

(56) Documents cités:
- EP-A- 0 800 940
- WO-A-2007/110724
- DE-A1- 10 233 415
- DE-C1- 19 530 378
- FR-A- 2 808 245
- US-A1- 2003 167 925

## Description

L'invention se rapporte au domaine technique des systèmes de gestion thermique pour un véhicule automobile. Plus particulièrement, l'invention a pour objet un système de gestion thermique comprenant une boucle de climatisation pour une installation de ventilation, chauffage et/ou climatisation.

De manière connue, un véhicule automobile est équipé d'une installation de ventilation, chauffage et/ou climatisation pour traiter thermiquement l'air de l'habitacle.

Cette installation comporte une boucle de climatisation assurant le refroidissement et la déshumidification de l'air parcourant l'installation de ventilation, chauffage et/ou climatisation avant son introduction dans l'habitacle. Ce refroidissement et cette déshumidification sont réalisés par un évaporateur traversé par un fluide réfrigérant mis en circulation par un compresseur relié au moteur thermique du véhicule. Elle comprend également une boucle de chauffage assurant le chauffage de l'air parcourant l'installation de ventilation, chauffage et/ou climatisation avant son introduction dans l'habitacle. Ce chauffage est réalisé par un radiateur traversé par un fluide caloporteur, ce dernier transportant les calories dégagées par le moteur thermique du véhicule vers l'échangeur de chaleur.

Ainsi, on comprend que le traitement thermique de l'air de l'habitacle est directement lié à la présence du moteur thermique dans le véhicule.

Pour des raisons environnementales, le moteur thermique tend à être remplacé par un moteur électrique ou hybride. Les moteurs électrique ou hybride impliquent d'une part la suppression de la boucle de chauffage puisque de tels moteurs ne dégagent pas assez de calories pour pouvoir chauffer convenablement l'air de l'habitacle, et d'autre part, impliquent l'utilisation de compresseurs électriques pour la boucle de climatisation.

Dans une telle situation, le compresseur électrique consomme de l'énergie électrique fournie par une batterie, elle-même alimentant en énergie électrique le moteur pour sa mise en oeuvre. Or, l'utilisation de l'énergie électrique de la batterie du véhicule électrique ou hybride par un composant du véhicule autre que le moteur impacte directement l'autonomie de conduite du véhicule.

Quant au chauffage de l'air de l'habitacle, il est réalisé par un radiateur électrique convertissant l'énergie électrique de la batterie en énergie thermique. Cependant, un tel radiateur consomme l'énergie électrique de la batterie et réduit ainsi l'autonomie de conduite du véhicule.

Il est donc recherché de diminuer au maximum la consommation d'énergie électrique de la batterie.

Pour cela, il est connu une boucle de climatisation utilisable en tant que pompe à chaleur. Selon cette solution, l'évaporateur de la boucle de climatisation logé à l'intérieur de l'installation de ventilation, chauffage et/ou climatisation et habituellement utilisé pour refroidir l'air de l'habitacle est utilisé pour chauffer l'air de l'habitacle. Un tel exemple de réalisation est illustré dans les documents FR2808245 et US 2003/167925. L'inconvénient de ce type d'architecture de boucle de climatisation est le suivant. Lors du mode dit de chauffage, c'est-à-dire lorsque l'évaporateur sert à chauffer l'air le traversant (et à condenser le fluide circulant à l'intérieur), un échangeur de chaleur, appartenant à la même boucle de climatisation et situé en face avant du véhicule, permet d'évaporer le fluide circulant à l'intérieur pour compléter le cycle thermodynamique. Ainsi, le flux d'air traversant cet échangeur de chaleur en face avant se refroidit. Ce mode de chauffage implique donc un risque de gel de l'échangeur de chaleur situé en face avant. Ce gel intervient lorsque le fluide circulant à l'intérieur de l'échangeur de chaleur est à une température inférieure à zéro degrés Celsius et si l'humidité contenue dans le flux d'air condense sur l'échangeur de chaleur ou si des gouttes d'eau se déposent sur l'échangeur de chaleur. Ce gel obture partiellement ou totalement ledit échangeur de sorte que le flux d'air ne peut plus le traverser. De ce fait, la boucle de climatisation en mode chauffage perd de son efficacité. Une opération de dégel est alors requise, ce qui nécessite un appareil adapté et consommateur d'énergie électrique et est particulièrement difficile lorsque le véhicule roule.

Dans un véhicule électrique ou hybride, il est connu d'utiliser la boucle de climatisation en combinaison avec un ou plusieurs autres circuits. Un exemple d'une telle réalisation est le document EP0800940. Le système de boucle et de circuit permet d'assurer de récupérer l'énergie thermique dégagée par un ou plusieurs composants du véhicule électrique tels que la batterie du véhicule, le moteur électrique du véhicule ou tout composant électrique et/ou électronique susceptible de dégager de la chaleur. Cependant, l'inconvénient majeur de ce système est de ne pas fournir de stockage thermique, c'est-à-dire de disposer d'un stock de frigories ou de calories disponible à tout moment. En effet, le système du document EP0800940 permet de récupérer seulement les pertes thermiques instantanées des composants du véhicule. Il est donc impossible de les stocker pour un usage ultérieur.

Il est possible d'utiliser un dispositif de stockage de chaleur logeant un matériau à changement de phase. Dans ce cas, un réservoir de stockage contenant le matériau à changement de phase permet de fournir une énergie thermique sous la forme de chaleur latente et/ou sensible pour chauffer l'air de l'habitacle sans puiser l'énergie électrique disponible de la batterie du véhicule.

On entend par « chaleur latente » la chaleur dégagée par le matériau avec changement de phase et sans changement de température, c'est-à-dire avec passage d'un état liquide à un état solide ou à un état gazeux et réciproquement. On entend par « chaleur sensible » la chaleur dégagée par le matériau sans changement de phase et avec changement de température.

Lorsque l'énergie thermique utilisée pour le chauffage de l'air de l'habitacle provient de la chaleur latente du matériau à changement de phase, ceci implique les inconvénients suivants :
- Pour obtenir une distribution efficace de l'énergie thermique dans l'habitacle, il est nécessaire de stocker une énergie thermique élevée. En d'autres termes, il est nécessaire que la température du matériau soit très élevée pour pouvoir disposer de la chaleur latente.
- Le réservoir de stockage doit être extrêmement bien isolé afin de conserver l'énergie thermique lors de conditions climatiques hivernales.
- Une fois l'énergie thermique disponible dans le réservoir utilisée, il est nécessaire de stocker de nouveau une énergie thermique élevée. En conséquence, une source de chaleur telle que la chaleur dégagée par la batterie ou la chaleur de l'air en provenance de l'extérieur est bien insuffisante pour atteindre le niveau de stockage maximum.
- L'utilisation de la chaleur latente pour le chauffage implique une température de changement de phase élevée, ce qui interdit l'utilisation de l'énergie thermique stockée pour le refroidissement de l'air de l'habitacle.

Lorsque l'énergie thermique utilisée provient de la chaleur sensible du matériau à changement de phase, il est possible d'utiliser cette énergie soit pour le chauffage soit pour le refroidissement, mais cela implique les inconvénients suivants :
- L'utilisation de la chaleur sensible réduit considérablement la capacité de stockage d'énergie thermique
- Le réservoir de stockage doit être extrêmement bien isolé afin de conserver l'énergie thermique lors de conditions climatiques hivernales et estivales.
- Une fois l'énergie thermique disponible dans le réservoir utilisée, il est nécessaire de stocker de nouveau une énergie thermique élevée.
- Si le dispositif de stockage thermique est utilisé pour stocker de l'énergie thermique pour le chauffage ou le refroidissement, l'utilisation de cette énergie thermique doit être décidée à l'avance ce qui est difficilement prévisible lors de conditions climatiques de transition (jour/nuit, printemps, automne).

L'invention a donc pour but de réduire la consommation de l'énergie électrique de la batterie du véhicule électrique ou hybride tout en assurant un confort thermique optimal au conducteur du véhicule quelque soit les conditions climatiques et à tout instant. Ainsi, en réduisant la consommation de l'énergie électrique de la batterie, l'autonomie de conduite du véhicule est préservée. En outre, l'invention a également pour but de récupérer le maximum d'énergie thermique, de simplifier un système de gestion thermique, de le rendre moins volumineux et moins onéreux.

Ce but est atteint par un système de gestion thermique selon les caractéristiques de la revendication 1.

Un tel système de gestion thermique présente les avantages suivants. La présence du moyen de stockage thermique permet de disposer d'un stock de calories ou de frigories à tout moment lors de l'utilisation de l'installation de ventilation, chauffage et/ou climatisation. Ce stock thermique permet de réduire la consommation électrique de la batterie. Ce dispositif d'échange thermique permet également de mutualiser les flux thermiques entre une boucle dans laquelle circule un fluide réfrigérant et un circuit dans lequel circule un fluide caloporteur. On entend par « flux thermique » tout échange de chaleur (calorie ou frigorie) à l'intérieur du dispositif d'échange thermique. Ainsi, le dispositif d'échange thermique permet d'emmagasiner des calories ou des frigories en provenance de différents flux thermiques (boucle de climatisation et/ou circuit secondaire du système de gestion thermique) pendant un instant t et de les restituer ultérieurement. Enfin, la combinaison du premier échangeur de chaleur, du deuxième échangeur de chaleur et du moyen de stockage thermique dans un même dispositif d'échange thermique unique permet d'utiliser le moyen de stockage thermique en continu, que ce soit pour délivrer des calories, délivrer des frigories, stocker des calories ou stocker des frigories. Cette utilisation en continu se fait lorsque le véhicule roule ou est à l'arrêt, sans nécessité de se connecter à un réseau domestique pour recharger le moyen de stockage thermique.

Selon l'invention, d'autres caractéristiques supplémentaires sont indiquées ci-dessous :
- le dispositif est délimité par une enceinte fermée.
- l'enceinte isole thermiquement le premier échangeur de chaleur, le deuxième échangeur de chaleur et le moyen de stockage thermique de l'extérieur du dispositif.
- le premier échangeur de chaleur est distinct du deuxième échangeur de chaleur.
- lé moyen de stockage thermique est logé à l'intérieur d'un compartiment
- le compartiment est localisé à l'intérieur du dispositif de sorte à échanger thermiquement avec le premier échangeur de chaleur et/ou le deuxième échangeur de chaleur.
- le dispositif comprend une première entrée et une première sortie reliées fluidiquement au premier échangeur de chaleur pour la circulation du fluide réfrigérant et une deuxième entrée et une deuxième sortie reliées fluidiquement au deuxième échangeur de chaleur pour la circulation du fluide caloporteur:
- le moyen de stockage thermique est un matériau à changement de phase
- le matériau à chargement de phase est choisi de sorte à avoir une; température de changement de phase supérieure ou égale à une température ambiante lors d'un mode de chauffage et inférieure à une température ambiante lors d'un mode de refroidissement.
- La température de changement de phase est comprise entre -10 et 10°C
- le matériau à changement de phase est de l'eau.

Un tel système permet aussi de s'affranchir du problème de givrage du condenseur de la boucle de climatisation lorsque ce condenseur est localisé en face avant et que la boucle de climatisation est utilisée en tant que « pompe à chaleur ». En effet, selon ce système selon l'invention, le condenseur de la boucle de climatisation n'est plus localisé dans la face avant du véhicule et ne réalise plus un échange thermique entre le réfrigérant et l'air extérieur. Selon l'invention, le condenseur (c'est-à-dire le premier échangeur de chaleur) réalise l'échange thermique entre le réfrigérant et le moyen de stockage thermique et/ou le fluide caloporteur du circuit secondaire. En outre, ce système permet de refroidir passivement pendant que le véhicule roule ou est à l'arrêt la batterie du véhicule et les autres composants. On entend par « passivement » le fait qu'il n'est pas nécessaire d'utiliser un appareillage supplémentaire pour refroidir la batterie. Un autre avantage est le fait que le système de gestion thermique se suffit à lui-même pour dissiper les calories produites par les composants même lors de l'arrêt du véhicule et pour se recharger en calories ou en frigories. Enfin un tel système permet de disposer des calories et/ou des frigories à tout moment. Du fait du moyen de stockage thermique, le système n'est pas dépendant de la quantité des pertes thermiques des composants du véhicule.

Selon l'invention, d'autres caractéristiques supplémentaires sont indiquées ci-dessous :
- la boucle comprend au moins un évaporateur pour refroidir un flux d'air principal le traversant, le circuit principal comprend au moins un radiateur pour chauffer le flux d'air en provenance de l'évaporateur et le circuit secondaire comprend au moins un auxiliaire apte à échanger de la chaleur entre au moins un composant électrique du véhicule et le fluide caloporteur.
- le dispositif est agencé de sorte à ce que le premier échangeur de chaleur soit connecté à la boucle et le deuxième échangeur de chaleur soit connecté au circuit secondaire.
- la boucle comprend un premier dispositif de détente localisé en entrée du premier échangeur de chaleur et un deuxième dispositif de détente localisé en sortie du premier échangeur de chaleur.
- le circuit principal est indépendant du circuit secondaire.

D'autres caractéristiques, détails et avantages de l'invention ressortiront plus clairement à la lecture de la description donnée ci-après à titre indicatif en relation avec la figure unique 1.

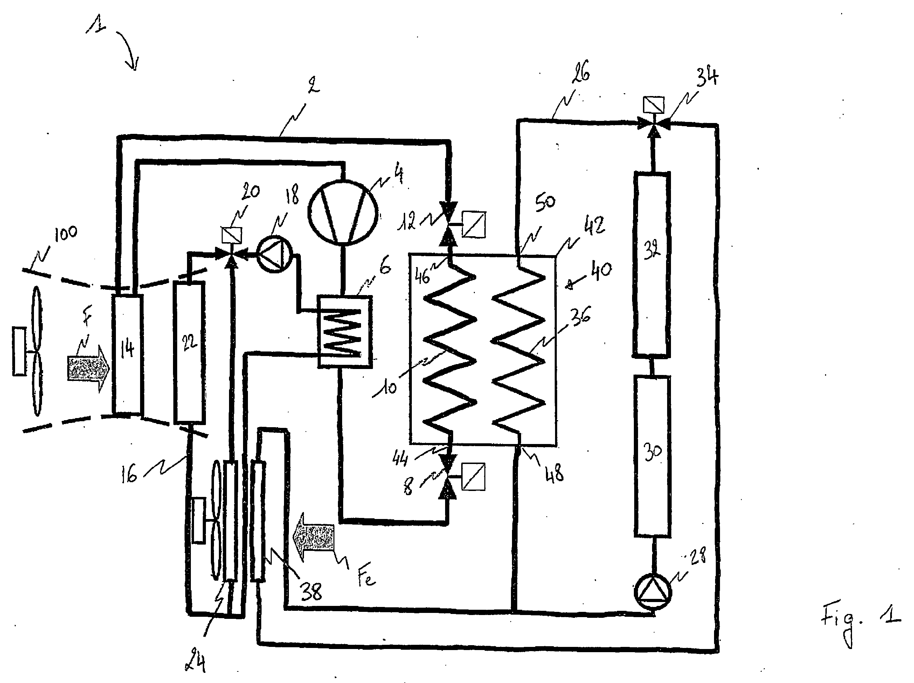

La figure 1 représente un premier mode de réalisation de l'invention. Un système de gestion thermique 1 comprend une boucle 2 de climatisation, un circuit principal 16 et un circuit secondaire 26. Ce système de gestion thermique 1 du véhicule permet à la fois d'apporter un confort thermique aux passagers du véhicule via une installation de ventilation, chauffage et/ou climatisation 100 et de réguler la température des composants du véhicule tels que la batterie du véhicule.

La boucle 2 de climatisation dans laquelle un fluide réfrigérant circule comprend un compresseur 4, un échangeur de chaleur réfrigérant-caloporteur 6, un premier dispositif de détente 8, un premier échangeur de chaleur 10, un deuxième dispositif de détente 12 et un évaporateur 14. Le fluide réfrigérant est du R134a, R744 (CO₂) ou du R1234yf. Dans la suite de la description, le fluide réfrigérant est nommé « réfrigérant ». L'évaporateur 14 est localisé à l'intérieur d'une installation de ventilation, chauffage et/ou climatisation 100 dans laquelle circule un flux d'air principal F destiné à être traité thermiquement avant son introduction dans l'habitacle du véhicule. L'évaporateur 14 permet de refroidir le flux d'air principal F et de le déshumidifier. Le compresseur 4 est électrique et alimenté en énergie par une batterie du véhicule. Les premier 8 et deuxième 12 dispositifs de détente sont des détendeurs électroniques. Selon le sens de circulation du réfrigérant à l'intérieur de la boucle 2, le premier dispositif de détente 8 est en amont du premier échangeur de chaleur 10 et le deuxième dispositif de détente 12 est en aval du premier échangeur de chaleur 10. En d'autres termes, le premier dispositif de détente 8 est localisé en entrée du premier échangeur de chaleur 10 et le deuxième dispositif de détente 12 est localisé en sorite du premier échangeur de chaleur 10. Cette disposition particulière permet d'utiliser le premier échangeur de chaleur 10 soit pour chauffer le réfrigérant soit pour refroidir le réfrigérant.

Le circuit principal 16 comprend une pompe 18, une première vanne 20, un radiateur 22, un échangeur de chaleur air-caloporteur 24 et l'échangeur de chaleur réfrigérant-caloporteur 6. Le radiateur 22 est localisé à l'intérieur de l'installation de ventilation, chauffage et/ou climatisation 100 et permet le chauffage du flux d'air principal F. L'échangeur de chaleur air-caloporteur 24 est localisé au niveau de la face avant du véhicule et est en conséquence traversé par un flux d'air extérieur Fe. Un fluide caloporteur (ci-après nommé « caloporteur ») circule à l'intérieur du circuit principal 16. Ce caloporteur est de l'eau glycolée par exemple. La première vanne 20 est une vanne à trois voies permettant de diriger le caloporteur soit vers le radiateur 22 soit vers l'échangeur de chaleur air-caloporteur 24. En effet, le radiateur 22 et l'échangeur de chaleur air-caloporteur 24 sont disposés en parallèle par rapport à la pompe 18 et à l'échangeur de chaleur réfrigérant-caloporteur 6.

Le circuit secondaire 26 dans lequel un fluide caloporteur tel que de l'eau glycolée comprend une pompe additionnelle 28, un premier auxiliaire 30, un deuxième auxiliaire 32, une deuxième vanne 34, un deuxième échangeur de chaleur 36 et un échangeur de chaleur externe 38. La deuxième vanne 34 est une vanne à trois vannes permettant de diriger le caloporteur soit vers le deuxième échangeur de chaleur 36 soit vers l'échangeur de chaleur externe 38. En effet, le deuxième échangeur de chaleur 36 et l'échangeur de chaleur externe 38 sont disposés en parallèle par rapport à la pompe additionnelle 28 et le premier 30 et le deuxième 32 auxiliaires.

Le circuit principal 16 et le circuit secondaire 26 sont indépendants l'un de l'autre. Plus précisément, ces deux circuits sont fluidiquement indépendants, c'est-à-dire que le caloporteur circulant à l'intérieur du circuit principal 16 ne circule pas à l'intérieur du circuit secondaire 26.

Le circuit principal 16 et le circuit secondaire 26 sont également fluidiquement indépendants de la boucle 2 dans laquelle circule le réfrigérant. Ainsi, le caloporteur et le réfrigérant ne peuvent se mélanger.

Le circuit principal 16 échange thermiquement avec la boucle 2 par l'intermédiaire de l'échangeur de chaleur réfrigérant-caloporteur 6. Cet échange thermique entre le réfrigérant de la boucle 2 et le caloporteur du circuit principal 16 sera décrit ultérieurement.

Le circuit secondaire 26 échange thermiquement avec la boucle 2 par l'intermédiaire d'un dispositif d'échange thermique 40. Ce dispositif d'échange thermique 40 comprend le premier échangeur de chaleur 10, le deuxième échangeur 36 et un moyen de stockage thermique M. Logé à l'intérieur du dispositif d'échange thermique 40, et plus particulièrement à l'intérieur d'un compartiment non représenté, le moyen de stockage thermique M est un matériau à changement de phase, tel que l'eau ou de la paraffine. Comme on le verra dans la description des modes de fonctionnement du système de gestion thermique 1, le dispositif d'échange thermique 40 est utilisable soit comme source de chaleur (délivrance de calories) soit comme puits de chaleur (délivrance de frigories). Le dispositif d'échange thermique comprend également une enceinte 42 fermée. Ainsi, le premier échangeur de chaleur 10, le deuxième échangeur de chaleur 36 et le moyen de stockage thermique M sont logés à l'intérieur de cette enceinte 42. On entend par « fermée » le fait que les échanges thermiques à l'intérieur du dispositif d'échange thermique ne sont pas influencés par des éléments extérieurs tels que le flux d'air extérieur. Une isolation thermique par rapport à l'extérieur du dispositif est donc réalisée par l'enceinte 42.

Les deux échangeurs de chaleur du dispositif d'échange thermique 40 sont distincts l'un de l'autre. En effet, le premier 10 et le deuxième 36 échangeurs de chaleur appartiennent respectivement à la boucle 2 et au circuit secondaire 26. Le dispositif d'échange de chaleur 40 est raccordé à la fois à la boucle 2 et au circuit secondaire 26. Pour ce faire, il comprend une première entrée 44 et une première sortie 46 reliées fluidiquement au premier échangeur de chaleur 10. Le dispositif 40 comprend également une deuxième entrée 48 et une deuxième sortie 50 reliées fluidiquement au deuxième échangeur de chaleur 36.

Le fonctionnement du système de gestion thermique 1 permet, en fonction des conditions climatiques extérieures (conditions hivernales ou estivales), de fournir un confort thermique optimal aux passagers du véhicule sans pour autant consommer un importante quantité d'énergie électrique en provenance de la batterie du véhicule.

Lors de conditions hivernales (température de l'air extérieur inférieure ou égale à 5°C), le système de gestion thermique fonctionne de sorte à réchauffer le flux d'air principal F. Le système de gestion fonctionne dans un mode de chauffage. Dans un mode de chauffage, le dispositif d'échange thermique 40 est alors chargé en calories à son niveau optimum. La charge en calories est réalisée en connectant au réseau domestique le véhicule pour chauffer le moyen de stockage thermique M. Par exemple, la température du moyen de stockage thermique est de 90°C.

La boucle 2 est mise en oeuvre selon un mode « pompe à chaleur ». Le compresseur 4 est allumé et comprime le réfrigérant. En sortie du compresseur 4, le réfrigérant est à haute température et haute pression. Le réfrigérant passe ensuite à l'intérieur de l'échangeur de chaleur réfrigérant-caloporteur 6 dans lequel il échange ses calories (chaud) avec le caloporteur du circuit principal 16 circulant à l'intérieur de l'échangeur de chaleur réfrigérant-caloporteur 6. De la sorte, le réfrigérant se refroidit et le caloporteur se charge en calories. En sortie de l'échangeur de chaleur réfrigérant-caloporteur 6, le réfrigérant atteint le premier dispositif de détente 8 dans lequel il subit une détente, ce qui abaisse sa température et sa pression. En sortie du premier dispositif de détente 8, le réfrigérant est alors à une température plus basse que celui du moyen de stockage thermique M du dispositif d'échange thermique 40. En conséquence, lorsque le réfrigérant circule à l'intérieur du premier échangeur de chaleur 10, il se réchauffe. Ensuite, le deuxième dispositif de détente 12 est ouvert de sorte à ne pas impacter le cycle thermodynamique du réfrigérant. Autrement dit, le réfrigérant ne subit aucune détente en passant à l'intérieur du deuxième dispositif de détente 12. Enfin, le réfrigérant circule dans l'évaporateur 14 puis retourne au compresseur 4. La température du réfrigérant lors de son passage à l'intérieur de l'évaporateur 14 est proche de celle de la température du flux d'air principal F en provenance de l'extérieur du véhicule. Ainsi, on considère que l'échange de chaleur entre le réfrigérant et le flux d'air principal F à l'intérieur de l'évaporateur 14 est négligeable.

En variante, la boucle 2 comprend une vanne et une ligne de contournement associée afin d'interdire le passage du réfrigérant à l'intérieur de l'évaporateur 14 et de guider le réfrigérant du deuxième dispositif de détente 12 directement vers le compresseur 4. Cette variante évite tout échange de chaleur non désiré entre le réfrigérant et le flux d'air principal F à l'intérieur de l'évaporateur lorsque l'on souhaite chauffer le flux d'air principal F.

Selon ce mode de réalisation, le circuit principal 16 reçoit des calories via l'échangeur de chaleur réfrigérant-caloporteur 6. Le circuit fonctionne alors de la manière suivante. Le caloporteur chargé en calories à l'intérieur de l'échangeur de chaleur réfrigérant-caloporteur 6 passe dans la pompe 18 puis dans la première vanne 20, laquelle dirige le caloporteur vers le radiateur 22. Les calories transportées par le caloporteur sont alors échangées avec le flux d'air principal F traversant le radiateur 22 pour le chauffer. Enfin, le caloporteur, déchargé en calories, rejoint l'échangeur de chaleur réfrigérant-caloporteur 6.

Dans ce mode de chauffage, le circuit secondaire 26 est également utilisé lorsque le véhicule roule. En effet, puisque le véhicule est en fonctionnement, les composants tels que la batterie, le système de propulsion ou de traction, ou tout dispositif électronique dégageant de la chaleur, sont sollicités et génèrent des calories. Or, il est nécessaire pour le bon fonctionnement de ces composants et leur durée de vie, d'évacuer les calories produites. Pour cela, un premier auxiliaire 30 permet d'évacuer les calories produites par les composants vers le caloporteur. Autrement dit, le premier auxiliaire 30 agit comme un dissipateur de chaleur. Lors du mode de chauffage, les calories produites par les composants sont alors échangées avec le caloporteur à 'intérieur du premier auxiliaire 30 puis diriger vers le deuxième échangeur de chaleur 36 du dispositif d'échange thermique 40. De la sorte, le moyen de stockage thermique M est rechargé par les calories en provenance des composants. Le circuit 26 est alors le suivant : pompe additionnelle 28, premier auxiliaire 30, deuxième auxiliaire 32, deuxième vanne 34, deuxième échangeur de chaleur 36 puis retour à la pompe additionnelle 28.

Lors de conditions estivales (température de l'air extérieur supérieure ou égale à 30°C), le système de gestion thermique est alors en mode refroidissement. Dans de telles conditions climatiques, le dispositif d'échange thermique 40 est chargé en frigories (froid) de manière optimale. La recharge est réalisée par une connexion à un réseau domestique. Ici, la température du moyen de stockage thermique est inférieure ou égale à 5°C.

Pour la boucle 2, le réfrigérant est comprimé dans le compresseur 4, se décharge en calories en passant à l'intérieur de l'échangeur de chaleur réfrigérant-caloporteur 6, passe dans le premier dispositif de détente 8 en subissant une première détente et circule à l'intérieur du premier échangeur de chaleur 10. Puisque le moyen de stockage thermique M comprend une quantité importante de frigories, le réfrigérant passant à l'intérieur du premier échangeur de chaleur 10 subit un refroidissement supplémentaire par rapport à celui subit à l'intérieur de l'échangeur de chaleur réfrigérant-caloporteur 6. Ce refroidissement supplémentaire améliore le coefficient de performance de la boucle 2. Ensuite le réfrigérant est détendu par le deuxième dispositif de détente 12 et est ainsi à l'état de basse pression et basse température. Le réfrigérant est enfin réchauffé en passant à l'intérieur de l'évaporateur 14, ce qui refroidit le flux d'air principal F. L'utilisation combinée du premier 8 et du deuxième 12 dispositifs de détente minimise l'utilisation du dispositif d'échange thermique 40 et améliore le coefficient de performance de la boucle 2. En effet, l'action des deux dispositifs de détente évite de décharger rapidement en frigories le moyen de stockage thermique M, ce qui se traduit par une utilisation plus longue du système de gestion thermique 1 lors de long voyages du véhicule en période estivale. Les deux détentes successivement subit par le réfrigérant permettent d'abaisser sa température sans utiliser une importante quantité de frigories du dispositif d'échange thermique 40.

Pour le circuit principal 16, le caloporteur, chargé en calories en provenance du réfrigérant au niveau de l'échangeur de chaleur réfrigérant-caloporteur 6, passe dans la pompe 18, la première vanne 20, l'échangeur de chaleur air-caloporteur 24 puis retourne à l'échangeur de chaleur réfrigérant-caloporteur 6. Ainsi, les calories du caloporteur sont évacuées du système de gestion thermique 1 via le flux d'air extérieur traversant l'échangeur de chaleur air-caloporteur 24. La première vanne 20 interdit donc le passage du caloporteur dans le radiateur 22.

Pour le circuit secondaire 26, le caloporteur circule dans la pompe additionnelle 28, dans le premier auxiliaire 30, le deuxième auxiliaire 32, la deuxième vanne 34, l'échangeur de chaleur externe 38 puis retourne à la pompe additionnelle 28. La deuxième vanne 34 interdit donc le passage du caloporteur vers le deuxième échangeur de chaleur 36. L'échangeur de chaleur externe 38 assure le refroidissement du caloporteur préalablement chargé en calories via le premier auxiliaire 30 du fait de la mise en oeuvre des composants du véhicule.

Lorsque les conditions climatiques sont telles que la température extérieure est aux environs de 10°C et que le taux d'humidité de l'air extérieur est élevé, il est nécessaire de chauffer le flux d'air principal F tout en le déshumidifiant pour éviter l'apparition de buée sur le pare-brise du véhicule. On utilise alors un mode de déshumidification.

Dans ce mode, la boucle 2 et le circuit secondaire 26 fonctionnent de la même manière que celle du mode refroidissement. Le circuit principal 16 fonctionne comme celui du mode de chauffage. Ainsi, l'évaporateur 14 refroidit et déshumidifie le flux d'air principal F puis le radiateur 22 chauffe ce flux d'air principal F avant son introduction dans l'habitacle du véhicule.

Le système de gestion thermique 1 permet en outre de réaliser un mode de refroidissement des composants du véhicule. Ce mode intervient lorsque le véhicule roule sans que les passagers du véhicule demande un traitement thermique de l'air de l'habitacle. Ainsi, la boucle 2 n'est pas mise en oeuvre ni le circuit principal 16. Seul le circuit secondaire 26 fonctionne. Le caloporteur, circulant sous l'action de la pompe additionnelle 28, passe à l'intérieur du premier auxiliaire 30 et se charge en calories en provenance des composants. Le caloporteur traverse le deuxième auxiliaire 32 dans lequel aucun échange thermique ne se produit et atteint le deuxième échangeur de chaleur 36. Le caloporteur se refroidit en échangeant thermique avec le moyen de stockage thermique M du dispositif d'échange thermique 40.

Ce mode de refroidissement des composants est également utilisable lorsque le véhicule est à l'arrêt et relié à un réseau domestique.

Lorsque le dispositif d'échange thermique 40 est utilisé dans un mode de fonctionnement, le moyen de stockage thermique M est utilisé. En conséquence, soit les calories soit les frigories sont utilisées et sont évacuées du dispositif d'échange thermique 40. Au bout d'un temps d'utilisation, le moyen de stockage thermique M doit donc être rechargé en calories ou en frigories.

Afin de restaurer la capacité de refroidissement du dispositif d'échange thermique 40, c'est-à-dire recharger en frigories le moyen de stockage thermique M, il existe différentes solutions. La première solution est de connecter le dispositif d'échange thermique 40 à un appareillage capable de recharger en frigories le moyen de stockage thermique M. L'appareillage, indépendant du système de gestion thermique 1, est par exemple disposé dans une station service ou dans un réseau domestique.

La deuxième solution intervient lorsque la température de l'air extérieur est inférieure à celle du moyen de stockage thermique M. Dans ce cas, le flux d'air extérieur est assimilé à une source de frigories. Seul le circuit secondaire 26 est mis en oeuvre pour restaurer cette capacité de refroidissement. La pompe additionnelle 28 fait circuler le caloporteur à travers le deuxième échangeur de chaleur qui échange des frigories en provenance du flux d'air extérieur traversant l'échangeur de chaleur air-caloporteur 24. Cette solution nécessite alors une vanne supplémentaire et une conduite associée pour mettre en série le deuxième échangeur de chaleur 36 et l'échangeur de chaleur air-caloporteur 24.

La troisième solution intervient lors de conditions estivales. Dans ce cas, la boucle 2 et le circuit principal 16 fonctionnent comme en mode refroidissement. Le circuit secondaire 26 est éteint. Le dispositif d'échange thermique 40 est rechargé en frigories via le premier échangeur de chaleur 10 dans lequel le réfrigérant cède ces frigories au moyen de stockage thermique M.

En variante, la boucle 2 comprend une vanne et une ligne de contournement associée permettant de contourner l'évaporateur 14. Ainsi, toutes les frigories créées par le cycle thermodynamique de la boucle 2 sont transférées au moyen de stockage thermique M via le premier échangeur de chaleur 10.

Lorsqu'il est nécessaire de restaurer la capacité de chauffage du dispositif d'échange thermique 40, il existe également différentes solutions. La première solution est de relier le dispositif d'échange thermique 40 à un appareil capable de recharger en calories le moyen de stockage thermique M. L'appareillage, indépendant du système de gestion thermique 1, est par exemple disposé dans une station service ou dans un réseau domestique.

La deuxième solution intervient lorsque la température de l'air extérieur est supérieure à celle du moyen de stockage thermique M. Dans ce cas, le flux d'air extérieur est assimilé à une source de calories. Seul le circuit secondaire 26 est mis en oeuvre pour restaurer cette capacité de chauffage. La pompe additionnelle 28 fait circuler le caloporteur à travers le deuxième échangeur de chaleur qui échange des calories en provenance du flux d'air extérieur traversant l'échangeur de chaleur air-caloporteur 24. Cette solution nécessite alors une vanne supplémentaire et une conduite associée pour mettre en série le deuxième échangeur de chaleur 36 et l'échangeur de chaleur air-caloporteur 24.

La troisième solution est d'utiliser le deuxième auxiliaire 32. Le deuxième auxiliaire 32 comprend un dissipateur de chaleur muni d'un élément résistif tel qu'une pierre à coefficient de température positif. Ainsi, on utilise le circuit secondaire 26 dans lequel le caloporteur se charge en calories en passant à l'intérieur du deuxième auxiliaire 32, ces calories étant ensuite transmises au moyen de stockage thermique M via le deuxième échangeur de chaleur 36.

Une quatrième solution est de disposer un élément résistif tel que décrit ci-dessus dans le dispositif d'échange thermique 40. ainsi, dès que le système de gestion thermique 1 est branché à un réseau domestique, l'élément résistif est alimenté en électricité et chauffe de sorte à augmenter la température du moyen de stockage thermique M.

La cinquième solution est d'utiliser la boucle 2. Les circuits principal 16 et secondaire 26 ne sont pas utilisés. Le réfrigérant comprimé passe à l'intérieur de l'échangeur de chaleur réfrigérant-caloporteur 6 en se déchargeant très peu de ces calories du fait que le caloporteur dans le circuit principal 16 ne circule pas. La majorité des calories du réfrigérant est donc transférée vers le moyen de stockage thermique M via le premier échangeur de chaleur 10. Le réfrigérant passe ensuite dans le deuxième dispositif de détente 12 puis dans l'évaporateur dans lequel il se réchauffe. Cette solution correspond à un véhicule à l'arrêt.

En variante de tous les modes décrits précédemment, le circuit principal 16 comprend un dispositif de chauffage électrique en amont du radiateur 22 selon le sens de circulation du caloporteur. Ce dispositif de chauffage électrique permet de compléter le chauffage du caloporteur pour améliorer le chauffage du flux d'air principal F traversant le radiateur 22.

Selon une autre variante, le système de gestion thermique 1 comprend un circuit supplémentaire comprenant une pompe, un échangeur de chaleur secondaire localisé en amont ou en aval selon le sens de circulation du flux d'air principal F à l'intérieur de l'installation de ventilation, chauffage et/ou climatisation 100 et un échangeur de chaleur localisé à l'intérieur du dispositif d'échange thermique 40. Avec un tel système de gestion thermique, il est possible d'utiliser les frigories ou les calories du moyen de stockage thermique M pour refroidir ou chauffer le flux d'air principal F sans mettre en oeuvre la boucle 2 et/ou le circuit principal 16. Un gain en consommation électrique de la batterie est alors obtenu.

## Revendications

1. Système de gestion thermique (1) pour une installation de ventilation, chauffage et/ou climatisation (100) d'un véhicule automobile comprenant
- une boucle (2) dans laquelle circule un fluide réfrigérant, la boucle (2) comprenant au moins un évaporateur (14) pour refroidir un flux d'air principal (F) le traversant,
- un circuit principal (16) dans lequel circule un fluide caloporteur, le circuit principal (16) comprenant au moins un radiateur (22) pour chauffer le flux d'air en provenance de l'évaporateur (14),
- un circuit secondaire (26) dans lequel circule un fluide caloporteur, le circuit secondaire (26) comprenant au moins un auxiliaire (30, 32) apte à échanger de la chaleur entre au moins un composant électrique du véhicule et le fluide caloporteur,
**caractérisé en ce qu'**il comprend un dispositif (40) d'échange thermique entre la boucle (2) et le circuit secondaire (26), le dispositif (40) d'échange thermique comprenant un premier échangeur de chaleur (10) apte à être traversé par le fluide réfrigérant, un deuxième échangeur (36) de chaleur apte à être traversé par le fluide caloporteur, le dispositif (40) comprenant un moyen de stockage thermique (M) pour échanger thermiquement avec le premier échangeur de chaleur (10) et/ou le deuxième échangeur de chaleur (36), le premier échangeur thermique (10) étant utilisé soit pour chauffer le fluide réfrigérant, soit pour refroidir le fluide réfrigérant.

2. Système de gestion thermique (1) selon la revendication 1, dans lequel le dispositif (40) est agencé de sorte à ce que le premier échangeur de chaleur (10) soit connecté à la boucle (2) et le deuxième échangeur de chaleur (36) soit connecté au circuit secondaire (26).

3. Système de gestion thermique (1) selon la revendication 2, dans lequel la boucle (2) comprend un premier dispositif de détente (8) localisé en entrée du premier échangeur de chaleur (10) et un deuxième dispositif de détente (12) localisé en sortie du premier échangeur de chaleur (10).

4. Système de gestion thermique (1) selon l'une quelconque des revendications 1 à 3, dans lequel le circuit principal (16) est indépendant du circuit secondaire (26).

5. Système de gestion thermique (1) selon l'une quelconque des revendications précédentes, dans lequel le dispositif (40) est délimité par une enceinte (42) fermée.

6. Système de gestion thermique (1) selon la revendication 5, dans lequel l'enceinte (42) isole thermiquement le premier échangeur de chaleur (10), le deuxième échangeur de chaleur (36) et le moyen de stockage thermique (M) de l'extérieur du dispositif (40).

7. Système de gestion thermique (1) selon l'une quelconque des revendications précédentes, dans lequel le premier échangeur de chaleur (10) est distinct du deuxième échangeur de chaleur (36).

8. Système de gestion thermique (1) selon l'une quelconque des revendications précédentes, dans lequel le moyen de stockage thermique (M) est logé à l'intérieur d'un compartiment.

9. Système de gestion thermique (1) selon la revendication 8, dans lequel le compartiment est localisé à l'intérieur du dispositif (40) de sorte à échanger thermiquement avec le premier échangeur de chaleur (10) et/ou le deuxième échangeur de chaleur (36).

10. Système de gestion thermique (1) selon l'une quelconque des revendications précédentes, dans lequel le dispositif (40) comprend une première entrée et une première sortie reliées fluidiquement au premier échangeur de chaleur (10) pour la circulation du fluide réfrigérant et une deuxième entrée et une deuxième sortie reliées fluidiquement au deuxième échangeur de chaleur (36) pour la circulation du fluide caloporteur.

11. Système de gestion thermique (1) selon l'une quelconque des revendications précédentes, dans lequel le moyen de stockage thermique (M) est un matériau à changement de phase.

12. Système de gestion thermique (1) selon la revendication 11, dans lequel le matériau à changement de phase est choisi de sorte à avoir une température de changement de phase supérieure ou égale à une température ambiante lors d'un mode de chauffage et inférieure à une température ambiante lors d'un mode de refroidissement.

13. Système de gestion thermique (1) selon la revendication 12, dans lequel température de changement de phase est comprise entre -10 et 10°C

14. Système de gestion thermique (1) selon l'une quelconque des revendications précédentes, dans lequel le matériau à changement de phase est de l'eau.

## Patentansprüche

1. Wärmeregelungssystem (1) für eine Belüftungs-, Heizungs- und/oder Klimaanlage (100) eines Kraftfahrzeugs, umfassend:
- eine Schleife (2), in der ein Kühlfluid zirkuliert, wobei die Schleife (2) mindestens einen Verdampfer (14) aufweist, um einen Hauptluftstrom (F) abzukühlen, der ihn durchquert,
- einen Hauptkreislauf (16), in dem ein Wärmeträgerfluid zirkuliert, wobei der Hauptkreislauf (16) mindestens einen Heizkörper (22) aufweist, um den Luftstrom zu erwärmen, der von dem Verdampfer (14) kommt,
- einen Sekundärkreislauf (26), in dem ein Wärmeträgerfluid zirkuliert, wobei der Sekundärkreislauf (26) mindestens eine Hilfsvorrichtung (30, 32) aufweist, die geeignet ist, Wärme zwischen mindestens einer elektrischen Komponente des Fahrzeugs und dem Wärmeträgerfluid auszutauschen,
**dadurch gekennzeichnet, dass** es eine Wärmetauschvorrichtung (40) zwischen der Schleife (2) und dem Sekundärkreislauf (26) aufweist, wobei die Wärmetauschvorrichtung (40) einen ersten Wärmetauscher (10), der geeignet ist, von dem Kühlfluid durchquert zu werden, einen zweiten Wärmetauscher (36) aufweist, der geeignet ist, von dem Wärmeträgerfluid durchquert zu werden, wobei die Vorrichtung (40) ein Wärmespeichermittel (M) aufweist, um mit dem ersten Wärmetauscher (10) und/oder dem zweiten Wärmetauscher (36) thermisch auszutauschen, wobei der erste Wärmetauscher (10) entweder zum Wärmen des Kühlfluids oder zum Kühlen des Kühlfluids verwendet wird.

2. Wärmeregelungssystem (1) nach Anspruch 1, wobei die Vorrichtung (40) derart angeordnet ist, dass der erste Wärmetauscher (10) an die Schleife (2) angeschlossen ist und der zweite Wärmetauscher (36) an den Sekundärkreislauf (26) angeschlossen ist.

3. Wärmeregelungssystem (1) nach Anspruch 2, wobei die Schleife (2) eine erste Entspannungsvorrichtung (8), die am Eingang des ersten Wärmetauschers (10) angeordnet ist, und eine zweite Entspannungsvorrichtung (12) aufweist, die am Ausgang des ersten Wärmetauschers (10) angeordnet ist.

4. Wärmeregelungssystem (1) nach einem der Ansprüche 1 bis 3, wobei der Hauptkreislauf (16) von dem Sekundärkreislauf (26) unabhängig ist.

5. Wärmeregelungssystem (1) nach einem der vorhergehenden Ansprüche, wobei die Vorrichtung (40) von einem geschlossenen Behälter (42) begrenzt ist.

6. Wärmeregelungssystem (1) nach Anspruch 5, wobei der Behälter (42) den ersten Wärmetauscher (10), den zweiten Wärmetauscher (36) und das Wärmespeichermittel (M) von der Außenseite der Vorrichtung (40) thermisch isoliert.

7. Wärmeregelungssystem (1) nach einem der vorhergehenden Ansprüche, wobei sich der erste Wärmetauscher (10) von dem zweiten Wärmetauscher (36) unterscheidet.

8. Wärmeregelungssystem (1) nach einem der vorhergehenden Ansprüche, wobei das Wärmespeichermittel (M) im Inneren einer Kammer angeordnet ist.

9. Wärmeregelungssystem (1) nach Anspruch 8, wobei die Kammer im Inneren der Vorrichtung (40) derart angeordnet ist, um mit dem ersten Wärmetauscher (10) und/oder dem zweiten Wärmetauscher (36) thermisch auszutauschen.

10. Wärmeregelungssystem (1) nach einem der vorhergehenden Ansprüche, wobei die Vorrichtung (40) einen ersten Eingang und einen ersten Ausgang, die fluidisch mit dem ersten Wärmetauscher (10) für das Zirkulieren des Kühlfluids verbunden sind, und einen zweiten Eingang und einen zweiten Ausgang aufweist, die fluidisch mit dem zweiten Wärmetauscher (36) für das Zirkulieren des Wärmeträgerfluids verbunden sind.

11. Wärmeregelungssystem (1) nach einem der vorhergehenden Ansprüche, wobei das Wärmespeichermittel (M) ein Material mit Phasenänderung ist.

12. Wärmeregelungssystem (1) nach Anspruch 11, wobei das Material mit Phasenänderung derart ausgewählt ist, dass es eine Phasenänderungstemperatur aufweist, die bei einem Heizmodus höher als oder gleich einer Umgebungstemperatur ist und bei einem Kühlmodus niedriger als eine Umgebungstemperatur ist.

13. Wärmeregelungssystem (1) nach Anspruch 12, wobei die Phasenänderungstemperatur zwischen -10 und 10 °C beträgt.

14. Wärmeregelungssystem (1) nach einem der vorhergehenden Ansprüche, wobei das Material mit Phasenänderung Wasser ist.

## Claims

1. Thermal management system (1) for a motor vehicle heating, ventilation and/or air conditioning installation (100) comprising
- a loop (2) through which a refrigerant circulates, the loop (2) comprising at least one evaporator (14) for cooling a main air flow (F) passing through it,
- a main circuit (16) through which a coolant circulates, the main circuit (16) comprising at least one heater (22) for heating the air flow coming from the evaporator (14),
- a secondary circuit (26) in which a coolant circulates, the secondary circuit (26) comprising at least one auxiliary (30, 32) able to exchange heat between at least one electrical component of the vehicle and the coolant,
**characterized in that** it comprises a device (40) for exchanging heat between the loop (2) and the secondary circuit (26), the heat exchange device (40) comprising a first heat exchanger (10) through which the refrigerant can pass, a second heat exchanger (36) through which the coolant can pass, the device (40) comprising a thermal storage means (M) for exchanging heat with the first heat exchanger (10) and/or the second heat exchanger (36), the first heat exchanger (10) being used either to heat the refrigerant or to cool the refrigerant.

2. Thermal management system (1) according to Claim 1, in which the device (40) is arranged in such a way that the first heat exchanger (10) is connected to the loop (2) and the second heat exchanger (36) is connected to the secondary circuit (26).

3. Thermal management system (1) according to Claim 2, in which the loop (2) comprises a first expansion device (8) located at the inlet of the first heat exchanger (10) and a second expansion device (12) located at the outlet of the first heat exchanger (10).

4. Thermal management system (1) according to any one of Claims 1 to 3, in which the main circuit (16) is independent of the secondary circuit (26).

5. Thermal management system (1) according to any one of the preceding claims, in which the device (40) is delimited by a closed enclosure (42).

6. Thermal management system (1) according to Claim 5, in which the enclosure (42) thermally insulates the first heat exchanger (10), the second heat exchanger (36) and the thermal storage means (M) from the outside of the device (40).

7. Thermal management system (1) according to any one of the preceding claims, in which the first heat exchanger (10) is distinct from the second heat exchanger (36).

8. Thermal management system (1) according to any one of the preceding claims, in which the thermal storage means (M) is housed inside a compartment.

9. Thermal management system (1) according to Claim 8, in which the compartment is located inside the device (40) so as to exchange heat with the first heat exchanger (10) and/or the second heat exchanger (36).

10. Thermal management system (1) according to any one of the preceding claims, in which the device (40) comprises a first inlet and a first outlet which are fluidically connected to the first heat exchanger (10) for the circulation of the refrigerant and a second inlet and a second outlet which are fluidically connected to the second heat exchanger (36) for the circulation of the coolant.

11. Thermal management system (1) according to any one of the preceding claims, in which the thermal storage means (M) is a phase-change material.

12. Thermal management system (1) according to Claim 11, in which the phase-change material is chosen so that it has a phase-change temperature above or equal to an ambient temperature during a heating mode and below an ambient temperature during a cooling mode.

13. Thermal management system (1) according to Claim 12, in which the phase-change temperature is between -10 and 10°C.

14. Thermal management system (1) according to any one of the preceding claims, in which the phase-change material is water.
